# EUROPÄISCHE PATENTSCHRIFT

(11) **EP 3 485 721 B1**
(45) Veröffentlichungstag und Bekanntmachung des Hinweises auf die Patenterteilung: **16.09.2020**
(21) Anmeldenummer: 18206158.0
(22) Anmeldetag: 14.11.2018
(51) Int. Cl.: A01F 12/40

(54) **SCHLÄGELANORDNUNG FÜR EINE STROHHÄCKSLERWELLE MIT EINER BEFESTIGUNGSÖFFNUNG IN EINER KONSOLE UND STROHHÄCKSLERWELLE**
FLAIL ASSEMBLY FOR A STRAW CHOPPER SHAFT WITH A SECURING OPENING IN A BRACKET AND STRAW CHOPPER SHAFT
DISPOSITIF DE FLÉAU POUR UN ARBRE DE BROYEUR DE PAILLE DOTÉ D'UNE OUVERTURE DE FIXATION DANS UNE CONSOLE ET ARBRE DE BROYEUR DE PAILLE

(30) Priorität: 15.11.2017 DE 102017126839
(43) Veröffentlichungstag der Anmeldung: 22.05.2019
(73) Patentinhaber: Rasspe Systemtechnik GmbH, 42929 Wermelskirchen (DE)
(72) Erfinder: FLANHARDT, Michael, 40764 Langenfeld (DE); ACIMAS, Andreas, 42699 Solingen (DE); LÜTTICH, Hans-Robert, 01809 Dohna (DE); ANDERS, Katharina, 01809 Dohna (DE)
(74) Vertreter: Neumann Müller Oberwalleney & Partner Patentanwälte

(56) Entgegenhaltungen:
- EP-A1- 0 277 129
- EP-A1- 1 757 183
- WO-A1-91/10351
- FR-A1- 2 479 646
- US-B2- 6 829 879

## Beschreibung

Die vorliegende Erfindung betrifft eine Schlägelanordnung für eine Strohhäckslerwelle mit einer Befestigungsöffnung in einer Konsole insbesondere für landwirtschaftliche Erntemaschinen, die ein Bolzenelement, das durch die Befestigungsöffnung der Konsole hindurchführbar ist, und ein Verdrehsicherungselements mittels dessen das Bolzenelement an der Konsole gegen Verdrehung abstützbar ist, umfasst. Ein erstes Befestigungselement ist mit einem ersten freien Endabschnitt des Bolzenelements verbunden. Ein erster Schlägel und eine erste Scheibe sitzen jeweils mit einer Bohrung auf dem Bolzenelement, wobei die erste Scheibe zwischen dem ersten Befestigungselement und dem ersten Schlägel angeordnet ist. Ferner betrifft die Erfindung eine Strohhäckslerwelle mit einer solchen Schlägelanordnung.

Strohhäckslerwellen werden unter anderem in landwirtschaftlichen Erntemaschinen eingesetzt, um das beim Ernteprozess anfallende Stroh in gehäckselter Form als Naturdünger flächig auf dem Feld zu verteilen. Die Strohhäckslerwelle übernimmt dabei neben dem Zerkleinern des Strohs auch weitestgehend die Funktion der gleichmäßigen Strohverteilung über die Schnittbreite durch die Erzeugung eines Luftstroms in radialer und axialer Richtung. Das Häckseln des Strohs wird durch an der Strohhäckslerwelle befestigte Schlägel erreicht, die mit Schneidklingen ausgestaltet sein können und durch eine feststehende Gegenstruktur rotieren, die ebenfalls Schneidklingen aufweisen kann. Die Schlägel können dazu entweder pendelnd gelagert sein, wobei diese im Betrieb bei Rotation der Strohhäckslerwelle durch die Fliehkraft radial nach außen stehend ausgerichtet werden, oder aber fest gelagert sein. Die Schlägelanordnung dient dazu, dass die Schlägel an der Konsole der Strohhäckslerwelle, die eine Befestigungsöffnung aufweist, befestigt werden können und gleichzeitig eine Demontage für den Austausch von Verschleißteilen ermöglicht wird. Ein Drehen oder Tauschen der Schlägel ist bei unvorhersehbaren Schäden, zum Beispiel durch Fremdkörper im Häckselgut, und regelmäßig circa alle 200 Betriebsstunden notwendig, da die Schneidklingen mit zunehmender Betriebsdauer stumpf werden und somit bei schlechterer Häckselqualität der Leistungsbedarf der Strohhäckslerwelle ansteigt. Für den Tausch der Schlägel einer kompletten Strohhäckslerwelle werden in der Regel vier Stunden veranschlagt.

Aus der US 6,829,879 B2 ist eine Schlägelanordnung der eingangs genannten Art bekannt. Das Bolzenelement und das Verdrehsicherungselement sind untereinander verbunden und durch die Konsole gegen Verdrehung gesichert. Das Verdrehsicherungselement ist hierzu mit einem Teil durch die Befestigungsöffnung in der Konsole geführt. Dieser Teil ist komplementär zur Befestigungsöffnung der Konsole ausgeführt, wobei die Form der Befestigungsöffnung von einer Kreisform abweicht, insbesondere eine ovale oder rechteckige Form aufweist. Nachteilig an dieser Schlägelanordnung ist, dass die Befestigungsöffnung der Konsole durch den Erntemaschinenhersteller vorgegeben wird und zumeist kreisförmig ausgeführt ist. Somit ist die vorgeschlagene Schlägelanordnung im Regelfall nicht für eine Nachrüstung geeignet. Ein weiterer Nachteil ist, dass die beiden Schlägel nicht unabhängig voneinander demontiert werden können, sodass der Bediener sowohl das Werkzeug als auch eine Vielzahl Montageteilen gleichzeitig handhaben muss.

In der EP 1 757 183 B1 ist eine weitere Schlägelanordnung beschrieben, die einen starr mit der Konsole verbundenen Bolzen umfasst, der im montierten Zustand links und rechts der Konsole zwei freie Enden aufweist, auf denen jeweils ein Häckselmesser drehbar gelagert ist. Die Häckselmesser werden jeweils über eine kreisringförmige Scheibe auf dem Bolzen gesichert, wobei die Scheiben jeweils über eine Schraubenverbindung lösbar mit dem Bolzen verbunden sind. Nachteilig an dieser Schlägelanordnung ist, dass der Bolzen im Regelfall in die Konsole eingepresst werden muss, sodass eine Nachrüstung und auch eine Demontage der beschriebenen Schlägelanordnung nicht ohne erheblichen Aufwand durchgeführt werden kann.

Die Aufgabe der vorliegenden Erfindung besteht somit darin, eine Schlägelanordnung und eine Strohhäckslerwelle mit einer Schlägelanordnung bereitzustellen, die eine einfache Demontage aller Teile der Schlägelanordnung ermöglicht.

Zur Lösung der Aufgabe wird eine erfindungsgemäß Schlägelanordnung für eine Strohhäckslerwelle mit einer Befestigungsöffnung in einer Konsole vorgeschlagen, umfassend: ein Bolzenelement, das durch die Befestigungsöffnung der Konsole hindurchführbar ist, ein Verdrehsicherungselement mittels dessen das Bolzenelement an der Konsole gegen Verdrehung abstützbar ist, ein erster Schlägel, der eine Bohrung aufweist, und mit der Bohrung auf dem Bolzenelement sitzt, ein erstes Befestigungselement, das mit einem ersten freien Endabschnitt des Bolzenelements verbunden ist, und eine erste Scheibe mit einer Bohrung, mit der die erste Scheibe auf dem Bolzenelement sitzt, sodass die erste Scheibe zwischen dem ersten Befestigungselement und dem ersten Schlägel angeordnet ist, wobei die erste Scheibe radial geschlitzt ausgeführt ist und das Bolzenelement mit dem ersten Befestigungselement axial, bezogen auf die Längsachse des Bolzenelements, verspannt ist und eine kleinste, mit einer Längsachse des Bolzenelements koaxiale, zylinderförmige Einhüllende des ersten Befestigungselements einen kleineren Radius als die Bohrung des ersten Schlägels aufweist.

Ein Vorteil der erfindungsgemäßen Schlägelanordnung ist, dass die Schlägelanordnung vom Bediener einhändig demontiert werden kann. Da das Bolzenelement drehfest mit der Konsole verbunden ist, wird zum Lösen des ersten Befestigungselements nur ein Werkzeug benötigt. In einer möglichen Ausführungsform weist der erste freie Endabschnitt des Bolzenelements zumindest teilweise ein erstes Gewinde auf. Das erste Befestigungselement ist als Mutter, insbesondere als selbstsichernde Mutter, ausgeführt, die mittels handelsüblicher Schraubenschlüssel gelöst und angezogen werden kann. Sobald das erste Befestigungselement soweit gelöst wurde, dass zwischen dem ersten Befestigungselement, der ersten Scheibe und dem Bolzenelement keine Verspannung mehr vorliegt, kann die erste, radial geschlitzte Scheibe in radialer Richtung vom Bolzenelement abgezogen werden. Dadurch wird der erste Schlägel axial freigeben und kann vollständig vom Bolzenelement abgezogen werden, da die kleinste, mit einer Längsachse des Bolzenelements koaxiale, zylinderförmige Einhüllende des ersten Befestigungselements einen kleineren Radius als die Bohrung des ersten Schlägels aufweist.

Die geschlitzte Scheibe umfasst eine Bohrung, die neben rund jede andere Form aufweise kann, die es ermöglicht, dass die geschlitzte Scheibe auf dem Bolzenelement sitzen kann, beispielsweise polygonal. Die Größe der Bohrung ist so gewählt, dass sich im montierten Zustand der Schlägelanordnung das erste Befestigungselement in axialer Richtung nicht hindurch schieben lässt. Weiter weist die radial geschlitzte Scheibe einen sich von der Bohrung bis zum Scheibenrand erstreckenden Schlitz auf, dessen Breite an jeder Stelle größer ist als der Durchmesser des Teilbereichs des Bolzenelements, auf dem die Scheibe im montierten Zustand sitzt. Der Schlitz folgt dabei einer gedachten Mittellinie, die sich vom Mittelpunkt der Bohrung der Scheibe bis zum Scheibenrand entweder gerade oder geschwungen, beispielsweise bogenförmig oder S-förmig, erstreckt.

Die Länge des ersten freien Endabschnitts ist so gewählt, dass das erste Befestigungselement in dem gelösten Zustand weiterhin mit dem Bolzenelement verbunden ist und daher nicht während einer Demontage separat aufbewahrt werden muss. Dies hat den Vorteil einer verringerten Verlustgefahr des ersten Befestigungselements.

Dass das Bolzenelement durch die Befestigungsöffnung der Konsole hindurchführbar und an der Konsole gegen Verdrehung abstützbar ist, bedeutet, dass in einem montierten Zustand der Schlägelanordnung an der Konsole das Bolzenelement durch die Befestigungsöffnung der Konsole hindurchgeführt und zumindest mittelbar an der Konsole gegen Verdrehung abgestützt ist. Hingegen ist in einem nicht-montierten Zustand der Schlägelanordnung an der Konsole das Bolzenelement nicht durch die Befestigungsöffnung der Konsole hindurchgeführt und nicht an der Konsole gegen Verdrehung abgestützt.

Der erste Schlägel kann eine gerade Form oder eine in sich gewundene bzw. tordierte Form, durch die insbesondere eine axiale Komponente des resultierenden Luftstroms erzeugt werden kann, aufweisen. Der erste Schlägel kann an einer oder beiden seiner langen Seiten mit Schneidklingen versehen sein oder keine Schneidklingen aufweisen, insbesondere wenn Gegenmesser vorgesehen sind, an denen die Schlägel vorbeibewegt werden. Der erste Schlägel kann aus einem metallischen Werkstoff, einem keramischen Werkstoff, Kunststoff oder einem Kunststoff-Verbundmaterial hergestellt sein. Ist der Schlägel aus einem metallischen Werkstoff hergestellt, so kann eine Seite des Messers stärker gehärtet sein als die andere, sodass sich die Schneidklingen bis zu einer Verschleißgrenze selbst nachschärfen.
In der erfindungsgemäßen Schlägelanordnung ist das Bolzenelement mittels eines Verdrehsicherungselements an der Konsole gegen Verdrehung abstützbar. In einer möglichen Ausführungsform weist dazu das Verdrehsicherungselement eine Stützfläche auf, die im montierten Zustand an der Konsole der Strohhäckslerwelle in Umfangsrichtung, bezogen auf eine Längsachse des Bolzenelements, abgestützt ist. Hierzu kann in einer möglichen Ausgestaltung das Bolzenelement einteilig mit dem Verdrehsicherungselement ausgeführt sein. Konsolen von Strohhäckslerwellen weisen häufig in einem Querschnitt eine weitgehend trapezartige Form auf, die radial außenliegend bezogen auf die jeweilige Drehachse der Strohhäckslerwellen durch eine gerade Anlagefläche begrenzt ist. Es ist aber jede andere Form der Konsole mit einer Anlagefläche denkbar, insbesondere kann die Anlagefläche gekrümmt sein. Die Stützfläche des Verdrehsicherungselements kann komplementär zur Anlagefläche der Konsole ausgeführt sein, zumindest aber so, dass im montierten Zustand Formschluss zwischen dem Verdrehsicherungselement und der Konsole vorliegt und somit das Verdrehsicherungselement drehfest, bezogen auf die Längsachse des Bolzenelements, ist. Es ist dabei unerheblich, ob zunächst ein Spiel, dass beispielsweise durch Toleranzen oder Formabweichungen zwischen dem Verdrehsicherungselement und der Konsole bedingt ist, überwunden werden muss, um den abgestützten Zustand des Verdrehsicherungselements zu erreichen. Dies gilt insbesondere wenn die Schlägelanordnung von einem der Zustände gelöst oder verspannt in den anderen überführt wird.

In einer möglichen Ausführungsform weist das Bolzenelement einen ersten Sicherungsabsatz, dessen Querschnitt von einer Kreisform abweicht, auf und das Verdrehsicherungselement weist einen ersten Durchbruch auf, der komplementär zum ersten Sicherungsabsatz gestaltet ist und den ersten Sicherungsabsatz im montierten Zustand drehfest aufnimmt. Der drehfeste Zustand soll dabei eine Fesselung zumindest des relativen rotatorischen Freiheitsgrads um die Längsachse des Bolzenelements umfassen, wobei die beiden weiteren relativen rotatorischen Freiheitsgrade ebenfalls gefesselt sein können. Es ist dabei unerheblich, ob zunächst ein Spiel, dass beispielsweise durch Toleranzen oder Formabweichungen zwischen dem ersten Sicherungsabsatz und dem ersten Durchbruch bedingt ist, überwunden werden muss, um den drehfesten Zustand zwischen Sicherungsabsatz und ersten Durchbruch zu erreichen.

Dies gilt insbesondere wenn die Schlägelanordnung von einem der Zustände gelöst oder verspannt in den anderen überführt wird. Somit ist als komplementäre Ausgestaltung des ersten Durchbruchs jede Form zu verstehen, die nach dem Verdrehen des Bolzenelements um einen beliebigen Winkel um seine Längsachse einen Formschluss zwischen Bolzenelement und Verdrehsicherungselement zulässt. In einer möglichen Ausführungsform setzt sich der erste Sicherungsabsatz des Bolzenelements im Querschnitt aus einem gedachten rechteckigen Mittelteil und zwei Kreissegmenten, die an den zwei gegenüberliegenden kurzen Enden des Mittelteils anschließen, zusammen. Durch eine derartige Form kann eine große Anlagefläche zwischen dem Verdrehsicherungselement und dem Sicherungsabsatz des Bolzenelements realisiert werden, die die Kontaktpressung und somit den Verschleiß zwischen den Kontaktpartner reduziert.

Der erste Schlägel sitzt in der erfindungsgemäßen Schlägelanordnung auf dem Bolzenelement. Sitzt der erste Schlägel unmittelbar auf dem Bolzenelement, kann das Bolzenelement hierzu einen zweiten Lagerabsatz aufweisen. In einer möglichen Ausführungsform sitzt eine Hülse mit einem zweiten Sicherungsabsatz, dessen Querschnitt von einer Kreisform abweicht, und einem ersten Lagerabsatz, auf dem der erste Schlägel radial gelagert ist, auf dem Bolzenelement und das Verdrehsicherungselement weist einen zweiten Durchbruch auf, der komplementär zum zweiten Sicherungsabsatz gestaltet ist und den zweiten Sicherungsabsatz im montierten Zustand drehfest aufnimmt. Der drehfeste Zustand soll dabei eine Fesselung zumindest des relativen rotatorischen Freiheitsgrads um die Längsachse der Hülse umfassen, wobei die beiden weiteren relativen rotatorischen Freiheitsgrade ebenfalls gefesselt sein können. Es ist dabei unerheblich, ob zunächst ein Spiel, dass beispielsweise durch Toleranzen oder Formabweichungen zwischen dem zweiten Sicherungsabsatz und dem zweiten Durchbruch bedingt ist, überwunden werden muss, um den drehfesten Zustand zwischen dem zweiten Sicherungsabsatz und zweiten Durchbruch zu erreichen. Somit ist als komplementäre Ausgestaltung des zweiten Durchbruchs jede Form zu verstehen, die nach dem Verdrehen der Hülse um einen beliebigen Winkel um ihre Längsachse einen Formschluss zwischen Hülse und Verdrehsicherungselement zulässt. Die Hülse kann einerseits die Funktion eines axialen Verschleißschutzes zwischen der Konsole und dem ersten Schlägel übernehmen und andererseits einen Lagerabsatz aufweisen, über den der erste Schlägel mittelbar auf dem Bolzenelement sitzt. Im Falle von Verschleiß an der Axialfläche oder der Lagerfläche der Hülse, kann die Hülse ohne weiteres durch ein Ersatzteil ausgetauscht werden.

Zur axialen Verspannung des Bolzenelements und des ersten Befestigungselements weist das Bolzenelement in einer möglichen Ausführungsform eine erste Anlagefläche auf, die im montierten Zustand in Richtung des ersten Befestigungselements an der Konsole der Strohhäckslerwelle axial, bezogen auf die Längsachse des Bolzenelements, abgestützt ist. Die Konsolen an Strohhäckslerwellen sind zumeist als aufgeschweißte Körper ausgeführt, die an ihren axialen Enden bezogen auf die Längsachse der Strohhäckslerwelle durch weitgehend flache Axialflächen begrenzt werden. Es ist aber auch denkbar, dass diese Axialflächen gekrümmt ausgeführt sind. Die erste Anlagefläche des Bolzenelements kann komplementär zur anliegenden ersten Axialfläche ausgeführt sein, zumindest aber so, dass im montierten und verspannten Zustand zumindest eines von Kraftschluss oder Formschluss zwischen Bolzenelement und Konsole vorgesehen ist.

Des Weiteren stützt sich zur axialen Verspannung das erste Befestigungselement mittelbar über zumindest die erste Scheibe an der gegenüberliegenden zweiten Axialfläche der Konsole ab. Der erste Schlägel wird in der erfindungsgemäßen Ausgestaltung ohne eine Hülse zwischen der ersten Scheibe und der zweiten Axialfläche der Konsole eingespannt und ist somit Teil der mittelbaren Abstützung des ersten Befestigungselements und durch Kraftschluss fest gelagert. In einer möglichen Ausführung mit einer Hülse sitzt der erste Schlägel auf dem ersten Lagerabsatz der Hülse. Ist die Breite des ersten Lagerabsatzes der Hülse größer als die Breite des ersten Schlägels im Bereich seiner Bohrung, ist die Hülse Teil der mittelbaren Abstützung des ersten Befestigungselements und wird zwischen der ersten Scheibe und der zweiten Axialfläche der Konsole eingespannt. Der erste Schlägel ist pendelnd um die Längsachse des Bolzens gelagert. Ist die Breite des Lagerabsatzes der Hülse kleiner als die Breite des Schlägels im Bereich seiner Bohrung, ist der erste Schlägel zwischen der ersten Scheibe und dem zweiten Sicherungsabsatz der Hülse eingespannt und ist somit Teil der mittelbaren Abstützung des ersten Befestigungselements und durch Kraftschluss fest gelagert.

Zur drehfesten Aufnahme des ersten Sicherungsabsatz des Bolzenelements und des zweiten Sicherungsabsatz der Hülse, ist das Verdrehsicherungselement in einer möglichen Ausführungsform als Spange ausgeführt und umfasst eine erste Seitenwange, die den ersten Durchbruch aufweist, eine zweite Seitenwange, die den zweiten Durchbruch aufweist, und einen Mittelsteg, der die Stützfläche aufweist. Die Spange kann in einer möglichen Ausführungsform so ausgeführt sein, dass der Mittelsteg des Verdrehsicherungselements in Bolzenlängsrichtung zwischen der ersten Seitenwange und der zweiten Seitenwange des Verdrehsicherungselements angeordnet ist.

Eine radiale Positionierung des Bolzenelements kann in einer möglichen Ausführungsform dadurch erzielt werden, dass das Bolzenelement einen ersten Führungsabsatz aufweist, der in die Befestigungsöffnung der Konsole einführbar ist.

In einer Ausführungsform ohne eine zusätzliche Hülse weist das Bolzenelement neben dem ersten Führungsabsatz, der in die Befestigungsöffnung der Konsole einführbar ist auch einen zweiten Lagerabsatz auf, um den der erste Schlägel gelagert ist. Das Bolzenelement ist dabei so gestaltet, dass der zweite Lagerabsatz im montierten Zustand der Schlägelanordnung auf der dem ersten Sicherungsabsatz gegenüberliegenden Seite der Konsole angeordnet ist und der Lagerabsatz eine geringere Breite aufweist als die des ersten Schlägels im Bereich seiner Bohrung.

Die bisher erläuterten Ausgestaltungen beschreiben Schlägelanordnung, durch die an der Konsole ein Schlägel befestigt wird. Eine weitere mögliche Ausführungsform umfasst einen zweiten Schlägel, der eine Bohrung aufweist und mit der Bohrung auf dem Bolzenelement sitzt, ein zweites Befestigungselement, das mit einem zweiten freien Endabschnitt des Bolzenelements verbunden ist, eine zweite Scheibe, die eine Bohrung aufweist, mit der die zweite Scheibe auf dem Bolzenelement sitzt, wobei die zweite Scheibe zwischen dem zweiten Befestigungselement und dem zweiten Schlägel angeordnet ist, die zweite Scheibe radial geschlitzt ausgeführt ist und eine kleinste, mit einer Längsachse des Bolzenelements koaxiale, zylinderförmige Einhüllende des zweiten Befestigungselements einen kleineren Radius als die Bohrung des zweiten Schlägels aufweist. Für das zweite Befestigungselement sollen die zuvor beschriebenen Eigenschaften des ersten Befestigungselements analog gelten, für die zweite Scheibe die Eigenschaften der ersten Scheibe, für den zweiten Schlägel die Eigenschaften des ersten Schlägels und für den zweiten freien Endanschnitt des Bolzenelements die Eigenschaften des ersten freien Endabschnitts des Bolzenelements.

Alle zuvor beschriebenen Elemente der möglichen Ausführungsformen der Schlägelanordnung neben den Schlägeln selbst können insbesondere aus einem metallischen Werkstoff oder einem Kunststoff hergestellt sein.

Die Aufgabe wird ferner durch eine Strohhäckslerwelle gelöst, die Folgendes aufweist: einen Rotor, zumindest eine Schlägelanordnung wie oben beschrieben, zumindest eine Konsole, die fest mit dem Rotor verbunden ist und eine Befestigungsöffnung aufweist, durch die das Bolzenelement der zumindest einen Schlägelanordnung geführt ist. Im Fall mehrerer mit dem Rotor verbundener Konsolen können diese auf der Mantelfläche des Rotors in Längs- und Umfangsrichtung verteilt sein. Die Verteilung der Konsolen kann insbesondere ungleichmäßig in Längsrichtung sein, um den Luftstrom für die Verteilung des Häckselguts zu optimieren.

Bevorzugte Ausführungsbeispiele werden nachstehend anhand der Zeichnungsfiguren erläutert. Hierin zeigt
- Figur 1: eine erste Ausführungsform einer erfindungsgemäßen Schlägelanordnung im montierten Zustand an einer Strohhäckslerwelle in einer perspektivischen Ansicht;
- Figur 2: eine Schlägelanordnung gemäß Figur 1 in Explosionsdarstellung;
- Figur 3: eine Schlägelanordnung gemäß Figur 1 in einem Längsschnitt in einer durch die Längsachsen A und B aufgespannten Ebene;
- Figur 4: Einzelheit Z aus Figur 3;
- Figur 5: das Bolzenelement der Schlägelanordnung gemäß Figur 1 in einer ersten perspektivischen Ansicht;
- Figur 6: das Bolzenelement der Schlägelanordnung gemäß Figur 1 in einer zweiten perspektivischen Ansicht;
- Figur 7: eine zweite Ausführungsform einer erfindungsgemäßen Schlägelanordnung im montierten Zustand an einer Strohhäckslerwelle in einem Längsschnitt in einer durch die Längsachsen A' und B aufgespannten Ebene;
- Figur 8: das Bolzenelement der Schlägelanordnung gemäß Figur 7 in einer ersten perspektivischen Ansicht;
- Figur 9: das Bolzenelement der Schlägelanordnung gemäß Figur 7 in einer zweiten perspektivischen Ansicht;

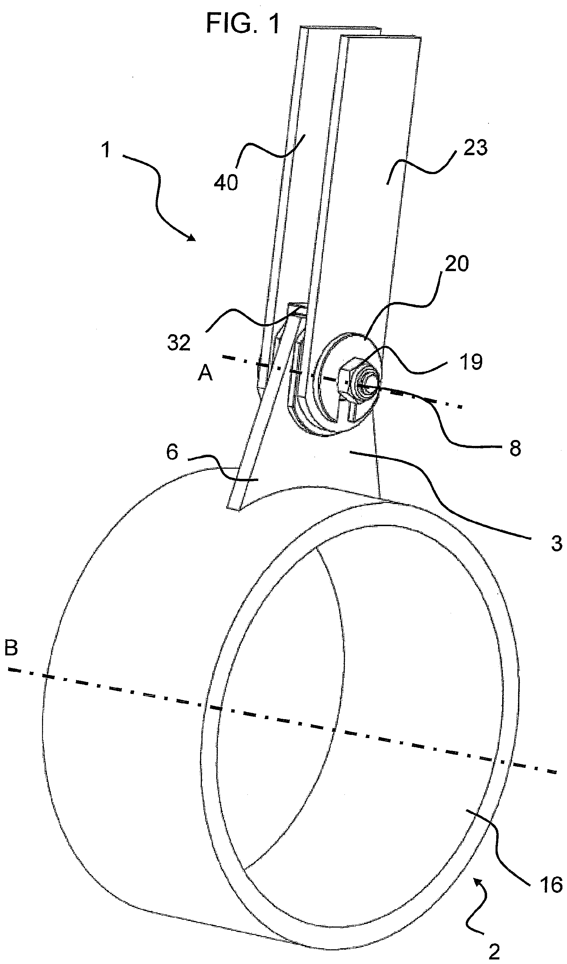

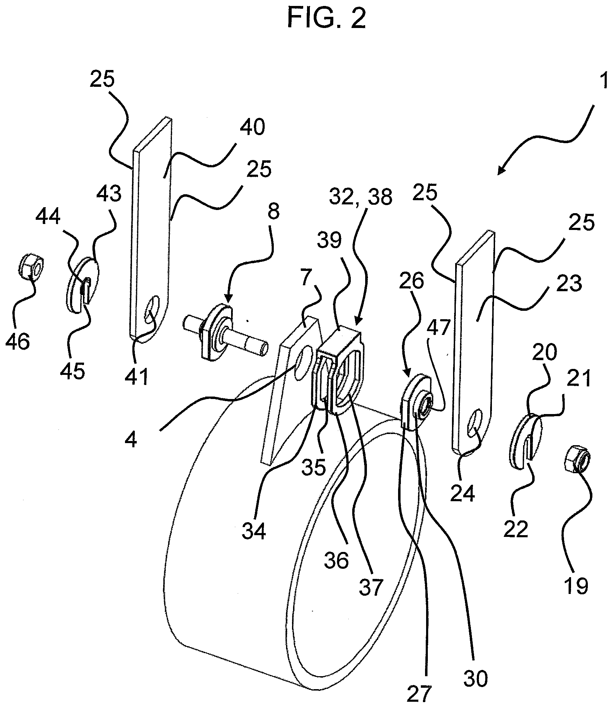

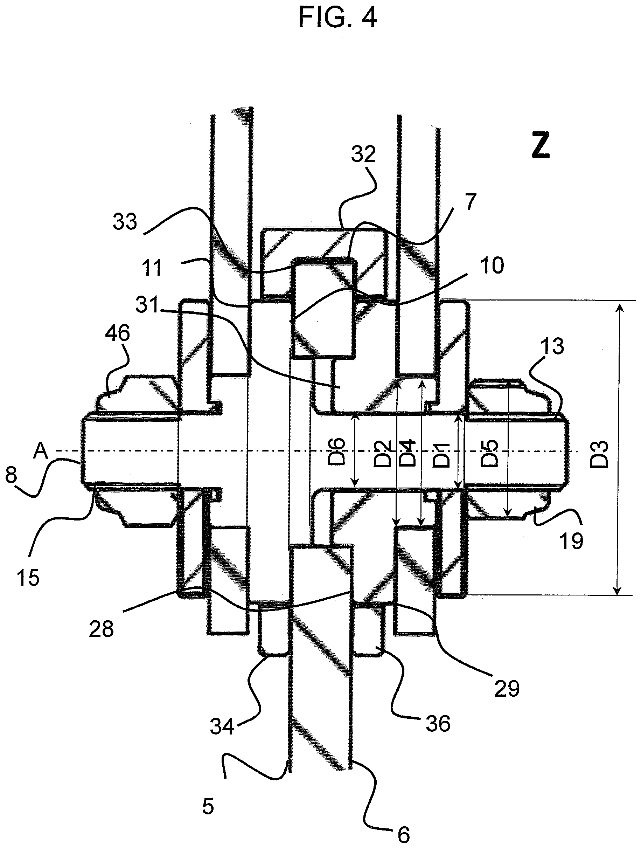

Die Figuren 1 bis 6, die nachstehend gemeinsam beschrieben werden, zeigen eine erfindungsgemäße Schlägelanordnung 1 in einer ersten Ausführungsform verbunden mit einer Strohhäckslerwelle 2. Um die Schlägelanordnung 1 aufnehmen zu können, weist die Strohhäckslerwelle 2 an einem Rotor 16 eine Konsole 3 mit einer Befestigungsöffnung 4 auf. Durch die Befestigungsöffnung 4 ist ein Bolzenelement 8 mit einem ersten freien Endabschnitt 12 koaxial zu einer Längsachse A hindurchgeführt, sodass eine erste Anlagefläche 10 eines ersten Sicherungsabsatzes 9 mit einer ersten Axialfläche 5 der Konsole 3 in Anlage ist. Die Befestigungsöffnung 4 ist in dieser Ausführungsform kreisförmig ausgeführt. Sie wird im Allgemeinen aber vom Landmaschinenhersteller definiert und kann auch eine von rund abweichende Form annehmen.

Auf dem ersten freien Endabschnitt 12 des Bolzenelements 8 sitzen eine Hülse 26, ein erster Schlägel 23 mit einer kreisförmigen Bohrung 24, eine erste Scheibe 20 mit einer kreisförmigen Bohrung 21 und ein erstes Befestigungselement 19, das mit dem ersten freien Endabschnitt 12 des Bolzenelements 8 fest verbunden ist.

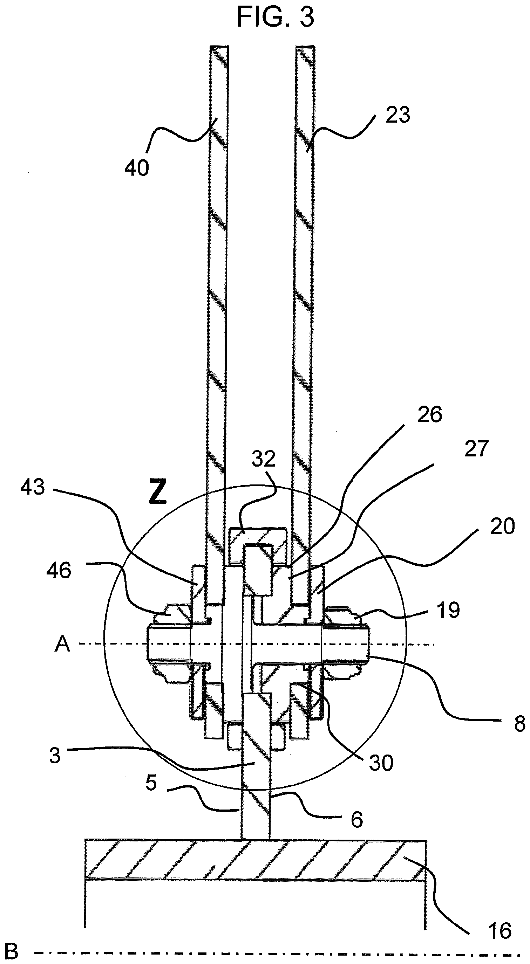

Die Hülse 26 weist einen zweiten Sicherungsabsatz 27 mit einer ersten Anlagefläche 28 auf, wobei die erste Anlagefläche 28 mit einer zweiten Axialfläche 6 der Konsole 3 in Anlage ist. Wie in Figur 3 zuerkennen, umfasst die Hülse 26 einen ersten Lagerabsatz 30, der sich auf einer von der Konsole 3 abgewandten Seite an den zweiten Sicherungsabsatz 27 anschließt und auf dem der erste Schlägel 23 mit der Bohrung 24 radial positioniert wird. Der erste Lagerabsatz 30 weist dabei in Richtung der Längsachse A betrachtet eine größere Breite auf als der erste Schlägel 23 im Bereich seiner Bohrung 24. Somit berührt die erste Scheibe 20, die auf einer von der Konsole 3 abgewandten Seite des ersten Schlägels 23 angeordnet ist, den ersten Lagerabsatz 30 der Hülse 26 mit einer Stirnfläche. Dazu ist die Bohrung 21 der ersten Scheibe 20 im Durchmesser D1 kleiner ausgeführt als der Außendurchmesser D2 des ersten Lagerabsatzes 30 der Hülse 26. Der erste Schlägel 23 ist somit pendelnd auf dem ersten Lagerabsatz 30 gelagert und kann innerhalb des resultierenden Axialspiels bewegt werden. In einer alternativen Ausführungsform kann der erste Lagerabsatz 30 in Richtung der Längsachse A betrachtet eine kleinere Breite aufweisen als der erste Schlägel 23 im Bereich seiner Bohrung 24, sodass die erste Scheibe 20 den ersten Schlägel 23 berührt und gegen diese axial abgestützt ist. Dazu ist der Außendurchmesser D3 der ersten Scheibe 20 größer ausgelegt als der Durchmesser D4 der Bohrung 24 des ersten Schlägels 23. Bei dieser Ausführungsform liegt im verspannten Zustand, auf den später eingegangen wird, der erste Schlägel 23 an der zweiten Anlagefläche 29 der Hülse 26 an. Der erste Schlägel 23 ist somit fest auf dem ersten Lagerabsatz 30 gelagert. Die Hülse 26 übernimmt in der dargestellten Ausführungsform zusätzlich die Funktion des Verschleißschutzes des ersten Schlägels 23 gegenüber der Konsole 3 und kann ihrerseits ohne weiteres durch ein Ersatzteil getauscht werden. Die Hülse 26 ist aus einem metallischen Werkstoff hergestellt, denkbar ist aber auch sie aus einem Kunststoff herzustellen.

Der erste Schlägel 23 ist in der dargestellten Ausführung in einer geraden Form ausgestaltet. Alternative könnte die Form auch in sich geschwungen bzw. tordiert sein, um den resultierenden Luftstrom zu optimieren. Der erste Schlägel 23 weist an beiden seiner langen Seiten hier nicht im Detail dargestellte Schneidklingen 25 auf und ist aus einem metallischen Werkstoff, einem keramischen Werkstoff, einem Kunststoff, einem Kunststoff-Verbundmaterial oder insbesondere einer Kombination dieser Materialien hergestellt.

Die erste Scheibe 20 weist entlang einer geraden Mittellinie, die sich ausgehend vom Mittelpunkt der Bohrung 21 bis zum radial außenliegenden Rand erstreckt, einen Schlitz 22 auf. Der Schlitz 22 ist an jeder Stelle breiter als der Durchmesser des Bereichs des Bolzenelements 8, auf dem die erste Scheibe 20 im montierten Zustand sitzt. In weiteren Ausführungsformen kann die Form der Mittellinie von gerade abweichen und insbesondere geschwungen, beispielsweise bogenförmig oder s-förmig, sein. Die Bohrung 21 ist kreisförmig ausgeführt, sie kann aber auch in jeder anderen Form ausgeführt sein, die einen Sitz auf dem Bolzenelement ermöglicht, beispielsweise polygonal. Die erste Scheibe ist aus einem metallischen Werkstoff hergestellt. Es ist aber auch jeder andere Werkstoff denkbar, der die resultierenden Pressungen aus der axialen Verspannung erträgt, insbesondere Kunststoffe oder Kunststoff-Verbunde.

Rechts der ersten Scheibe 20 ist das erste Befestigungselement 19 angeordnet und als selbstsichernde Außensechskant-Mutter ausgeführt. Das Innengewinde der Mutter nimmt ein erstes Gewinde 13 des ersten freien Endabschnitts 12 des Bolzenelements 8 auf.

Für die Montage der Schlägelanordnung 1 an die Strohhäckslerwelle 2, wird die Anordnung in einen axial verspannten Zustand überführt. Dazu wird das erste Befestigungselement 19 auf dem ersten Gewinde 13 angezogen. Das erste Befestigungselement 19 stützt sich mit seiner Auflagefläche 42 über die erste Scheibe 20 und die Hülse 26 an der zweiten Axialfläche 6 der Konsole 3 ab, während sich das Bolzenelement 8 mit der ersten Anlagefläche 10 des ersten Sicherungsabsatzes 9 an der ersten Axialfläche 5 der Konsole 3 abstützt. In der zuvor beschriebenen Ausführungsform, in der der erste Schlägel 23 fest gelagert ist, ist der erste Schlägel 23 zusätzlich Teil der mittelbaren Abstützung des ersten Befestigungselements 19 an der zweiten Axialfläche 6 der Konsole 3. Die erste Anlagefläche 10 des Bolzenelements 8 und die erste Axialfläche 5 der Konsole 3 sowie die erste Anlagefläche 28 der Hülse 26 und die zweite Axialfläche 6 der Konsole 3 sind in der dargestellten Ausführungsform weitestgehend eben. Es ist aber auch denkbar, dass diese Flächen jeweils komplementär gekrümmt zueinander ausgeführt sind.

Ausgehend von dem montierten, axial verspannten Zustand kann die Gesamtanordnung aus Schlägelanordnung 1 und Strohhäckslerwelle 2 in den montierten, gelösten Zustand überführt werden, in dem das erste Befestigungselement 19 so weit gelöst wird, dass die axial Verspannung abgebaut ist. Dazu ist der erste freie Endabschnitt 12 so breit ausgeführt, dass ein komplettes Abschrauben des ersten Befestigungselements 19 vom ersten Gewinde 13 nicht notwendig ist und das erste Befestigungselement 19 weiterhin mit dem Bolzenelement 8 verbunden ist. In dem zuvor beschriebenen gelösten Zustand ist der erste Schlägel 23 weiterhin durch die erste Scheibe 20 axial gesichert. Um den ersten Schlägel 23 axial freizugeben, wird die erste Scheibe 20 über den Schlitz 22 radial vom Bolzenelement 8 gezogen. Der Durchmesser D4 der Bohrung 24 des ersten Schlägels 23 ist dabei größer gewählt als der Durchmesser D5 einer kleinsten, mit einer Längsachse A des Bolzenelements 8 koaxialen, zylinderförmigen Einhüllenden des ersten Befestigungselements 19, sodass sich der erste Schlägel 23 axial über das erste Befestigungselement 19 ziehen lässt. Der Durchmesser D5 der zuvor beschrieben Einhüllenden des ersten Befestigungselements 19 ist zudem größer als der Durchmesser D6 der Durchgangsbohrung 47 der Hülse 26. Insbesondere, wenn es sich bei dem ersten Befestigungselement 19 um eine selbstsichernde Mutter handelt, sind auch nach dem Abziehen der ersten Scheibe 20 und des ersten Schlägels 23 alle weiteren Teil der Schlägelanordnung 1 an der Konsole 3 gesichert. Nach einem kompletten Abschrauben des ersten Befestigungselements 19 kann die Schlägelanordnung 1 von der Strohhäckslerwelle 2 demontiert werden.

Um die Gesamtanordnung aus Schlägelanordnung 1 und Strohhäckslerwelle 2 einfach und möglichst einhändig in den montierten, verspannten Zustand, in den montierten, gelösten Zustand und zurück in einen unmontierten Zustand überführen zu können, weist die Schlägelanordnung 1 ein Verdrehsicherungselement 32 auf. Das Verdrehsicherungselement 32 ist so angeordnet, dass sich eine Stützfläche 33 der Verdrehsicherungselements 32 an einer Anlagefläche 7 der Konsole 3 abstützt und somit bezüglich der Längsachse A des Bolzenelements 8 drehfest ist. Das Verdrehsicherungselement 32 ist als Spange 38 ausgeführt, die eine über einen die Stützfläche 33 umfassenden Mittelsteg 39 verbundene erste Seitenwange 34 und zweite Seitenwange 36 aufweist. Die erste Seitenwange 34 umfasst einen ersten Durchbruch 35, der komplementär zur Außenkontur des ersten Sicherungsabsatzes 9 des Bolzenelements 8 gestaltet ist. Die erste Seitenwange 34 ist so angeordnet, dass der Sicherungsabsatz 9 von der ersten Seitenwange 34 umschlossen ist. Somit ist das Bolzenelement 8 mittelbar über das Verdrehsicherungselement 32 an der Konsole 3 in Umfangsrichtung abgestützt und bezüglich der eigenen Längsachse A drehfest. Das erste Befestigungselement 19 kann somit einhändig, beispielsweis mittels eines Maulschlüssels, angezogen oder gelöst werden.

Die zweite Seitenwange 36 umfasst einen zweiten Durchbruch 37, der komplementär zur Außenkontur des zweiten Sicherungsabsatzes 27 der Hülse 26 gestaltet ist. Die zweite Seitenwange 36 ist so angeordnet, dass der zweite Sicherungsabsatz 27 von der zweiten Seitenwange 36 umschlossen ist. Somit ist die Hülse 26 mittelbar über das Verdrehsicherungselement 32 an der Konsole 3 in Umfangsrichtung abgestützt und bezüglich der Längsachse A des Bolzenelements 8 drehfest. Dadurch werden die Relativbewegungen und somit auch der resultierende Verschleiß zwischen der Hülse 26 und dem ersten Schlägel 23 sowohl im axialen als auch im radialen Kontaktbereich reduziert.

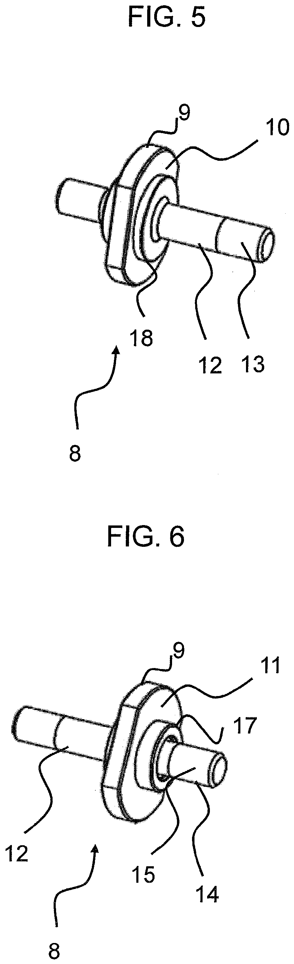

Die Querschnitte des ersten Sicherungsabsatzes 9 des Bolzenelements 8 und des zweiten Sicherungsabsatzes 27 der Hülse 26 sind identisch ausgeführt. Wie in Figur 5 und Figur 6 am besten zu erkennen, setzt sich der erste Sicherungsabsatz 9 und der zweite Sicherungsabsatz 27 im Querschnitt aus einem gedachten rechteckigen Mittelteil und zwei Kreissegmenten, die an den zwei gegenüberliegenden kurzen Enden des Mittelteils anschließen, zusammen. Diese Ausführungsform ermöglicht auch unter Last eine große effektive Kontaktfläche zwischen dem ersten Sicherungsabsatz 9 und der ersten Seitenwange 34 bzw. dem zweiten Sicherungsabsatz 27 und der zweiten Seitenwange 36. Es ist aber selbstverständlich, dass die Außenkontur des ersten Sicherungsabsatzes 9 bzw. zweiten Sicherungsabsatzes 27 und die jeweilige komplementäre Form des ersten Durchbruches 35 und des zweiten Durchbruches 37 jede von einem Kreis abweichende Form, die einen Formschluss zwischen dem Bolzenelement 8 bzw. der Hülse 26 und dem Verdrehsicherungselement 32 ermöglicht, annehmen kann. Das Bolzenelement 8 und das Verdrehsicherungselement 32 sind aus einem metallischen Werkstoff hergestellt, um den Verschleiß in den Kontaktbereichen zu minimieren. Es ist aber auch denkbar die beiden Bauteile aus einem Kunststoff oder eines der Bauteile aus einem Kunststoff und das andere Bauteil aus einem metallischen Werkstoff herzustellen

Um die Schlägelanordnung 1 radial zur Strohhäckslerwelle 2 zu positionieren, weist das Bolzenelement 8 einen ersten Führungsabsatz 18 und die Hülse 26 einen zweiten Führungsabsatz 31 auf, die jeweils in die Befestigungsöffnung 4 der Konsole 3 eingeführt und komplementär zur Befestigungsöffnung 4, insbesondere kreisförmig, ausgestaltet sind. Die Breite des ersten Führungsabsatzes 18 und des zweiten Führungsabsatzes 31 sind dabei kleiner als die halbe Breite der Konsole 3 im Bereich der Befestigungsöffnung 4.

Auf der von der Konsole 3 abgewandten Seite des ersten Sicherungsabsatzes 9 weist das Bolzenelement 8 einen zweiten Lagerabsatz 17, auf dem ein zweiter Schlägel 40 mit einer Bohrung 41 sitzt, und einen zweiten freien Endabschnitt 14 mit einem zweiten Gewinde 15 auf. In Anlage zum zweiten Lagerabsatz 17 sitzt eine zweite geschlitzte Scheibe 43 mit einer Bohrung 44 auf dem zweiten freien Endabschnitt 14. Ein zweites Befestigungselement 46 ist als selbstsichernde Mutter ausgeführt und über das zweite Gewinde 15 mit dem zweiten freien Endabschnitt 14 verbunden. Zur Montage des zweiten Schlägels 40 an der Konsole 3 wird das zweite Befestigungselement 46 angezogen, sodass es in einen axial verspannten Zustand mit dem Bolzenelement 8 überführt wird. Dazu stützt sich das zweite Befestigungselement 46 über die zweite Schreibe 43 am zweiten Lagerabsatz 17 ab. Analog zum ersten Schlägel 23 kann der zweite Schlägel 40 durch radiales Abziehen der zweiten Scheibe 43 im montierten, gelösten Zustand axial freigegeben werden.

Der zweite Lagerabsatz 17 ist breiter ausgestaltet als der zweite Schlägel 40 im Bereich seiner Bohrung 41 und ist somit pendelnd gelagert. Alternativ könnte der zweite Lagerabsatz 17 schmaler ausgestaltet sein als der zweite Schlägel 40 im Bereich seiner Bohrung 41 und wäre dann fest gelagert.

Da das Bolzenelement 8 über die Verdrehsicherungselement 32 in Umfangsrichtung an der Konsole 3 abgestützt ist, lässt sich das zweite Befestigungselement 46 analog zu dem ersten Befestigungselement 19 einfach, insbesondere einhändig, anziehen und lösen.

Darüber hinaus gelten für das zweite Befestigungselement 46 die beschriebenen Eigenschaften des ersten Befestigungselements 19 analog, für die zweite Scheibe 43 die Eigenschaften der ersten Scheibe 20 und für den zweiten Schlägel 40 die Eigenschaften des ersten Schlägels 23.

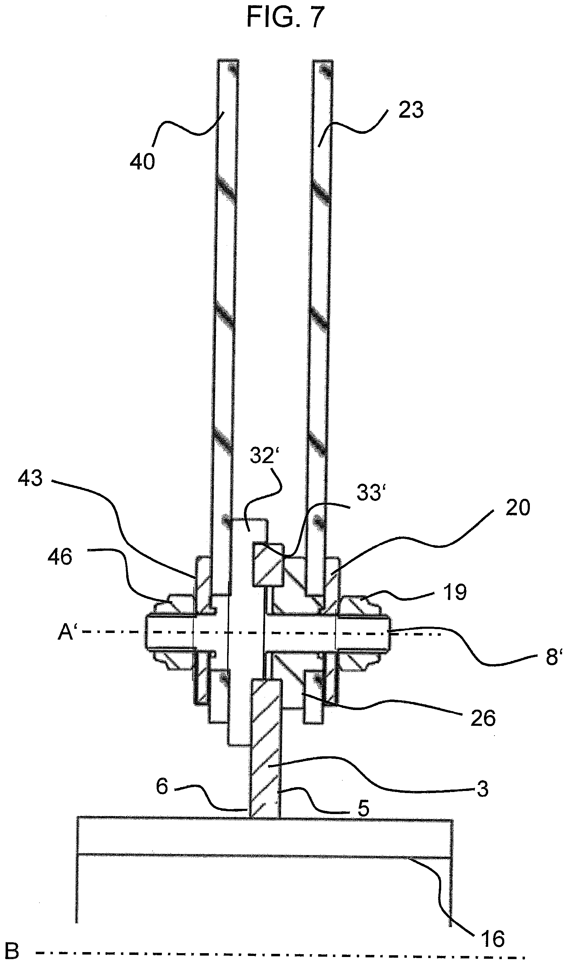

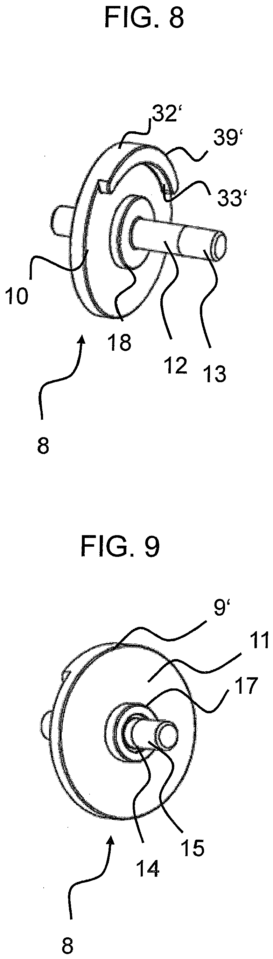

In den Figuren 7 bis 9, die im Folgenden gemeinsam beschrieben werden, ist eine zweite erfindungsgemäße Ausführungsform einer Schlägelanordnung dargestellt. Diese entspricht weitestgehend der Ausführungsform gemäß den Figuren 1 bis 6, sodass hinsichtlich der Gemeinsamkeiten auf die obige Beschreibung Bezug genommen wird. Dabei sind gleiche beziehungsweise einander entsprechende Einzelheiten mit gleichen Bezugszeichen versehen wie in den Figuren 1 bis 6 und dort beschrieben.

In der dargestellten Ausführung ist das Verdrehsicherungselement 32' einteilig mit dem Bolzenelement 8' ausgeführt und weist im Gegensatz zur ersten beschriebenen Ausführungsform der Schlägelanordnung keine zweite Seitenwange auf. Der Mittelsteg 39' des Verdrehsicherungselement 32' erstreckt sich radial außen liegend als Kreisringsegment vom kreisringförmigen ersten Sicherungsabsatz 9' in axialer Richtung und weist eine Stützfläche 33' auf. Das Bolzenelement 8' ist über die Stützfläche 33' an der Anlagefläche der Konsole 7 in Umfangsrichtung bezogen auf seine eigene Längsachse A abgestützt und somit drehfest.

### Bezugszeichenliste

- 1: Schlägelanordnung
- 2: Strohhäckslerwelle
- 3: Konsole
- 4: Befestigungsöffnung
- 5: Erste Axialfläche der Konsole
- 6: Zweite Axialfläche der Konsole
- 7: Anlagefläche der Konsole
- 8, 8': Bolzenelement
- 9, 9': Erster Sicherungsabsatz
- 10: Erste Anlagefläche
- 11: Zweite Anlagefläche
- 12: Erster freier Endabschnitt
- 13: Erstes Gewinde
- 14: Zweiter freier Endabschnitt
- 15: Zweites Gewinde
- 16: Rotor
- 17: Zweiter Lagerabsatz
- 18: Erster Führungsabsatz
- 19: Erstes Befestigungselement
- 20: Erste Scheibe
- 21: Bohrung
- 22: Schlitz
- 23: Erster Schlägel
- 24: Bohrung
- 25: Schneidklinge
- 26: Hülse
- 27: Zweiter Sicherungsabsatz
- 28: Erste Anlagefläche
- 29: Zweite Anlagefläche
- 30: Erster Lagerabsatz
- 31: Zweiter Führungsabsatz
- 32, 32': Verdrehsicherungselement
- 33, 33': Stützfläche
- 34: Erste Seitenwange
- 35: Erster Durchbruch
- 36: Zweite Seitenwange
- 37: Zweiter Durchbruch
- 38: Spange
- 39, 39': Mittelsteg
- 40: Zweiter Schlägel
- 41: Bohrung
- 42: Auflagefläche
- 43: Zweite Scheibe
- 44: Bohrung
- 45: Schlitz
- 46: Zweites Befestigungselement
- 47: Durchgangsbohrung der Hülse

- A, A': Längsachse des Bolzenelements 8, 8'
- B: Längsachse der Strohhäckslerwelle 2
- D1: Durchmesser der Bohrung 21
- D2: Außendurchmesser des ersten Lagerabsatzes 30
- D3: Außendurchmesser der ersten Scheibe 20
- D4: Durchmesser der Bohrung 24
- D5: Durchmesser Einhüllende erstes Befestigungselement 19
- D6: Durchmesser der Durchgangsbohrung 47

## Patentansprüche

1. Schlägelanordnung (1) für eine Strohhäckslerwelle (2) mit einer Befestigungsöffnung (4) in einer Konsole (3) umfassend:
ein Bolzenelement (8, 8'), das durch die Befestigungsöffnung (4) der Konsole (3) hindurchführbar ist,
ein Verdrehsicherungselement (32, 32') mittels dessen das Bolzenelement (8, 8') an der Konsole (3) gegen Verdrehung abstützbar ist,
ein erster Schlägel (23) mit einer Bohrung (24), mit der der erste Schlägel (23) auf dem Bolzenelement (8, 8') sitzt,
ein erstes Befestigungselement (19), das mit einem ersten freien Endabschnitt (12) des Bolzenelements (8, 8') verbunden ist, und
eine erste Scheibe (20) mit einer Bohrung (21), mit der die erste Scheibe (20) auf dem Bolzenelement (8, 8') sitzt, wobei die erste Scheibe (20) zwischen dem ersten Befestigungselement (19) und dem ersten Schlägel (23) angeordnet ist,
**dadurch gekennzeichnet,**
**dass** die erste Scheibe (20) radial geschlitzt ausgeführt ist und
**dass** das Bolzenelement (8, 8') mit dem ersten Befestigungselement (19) und
der ersten Scheibe (20) axial, bezogen auf eine Längsachse (A, A') des Bolzenelements (8, 8'), verspannt ist, und
**dass** eine kleinste, mit der Längsachse (A, A') des Bolzenelements (8, 8') koaxiale, zylinderförmige Einhüllende des ersten Befestigungselements (19) einen kleineren Radius als die Bohrung (24) des ersten Schlägels (23) aufweist.

2. Schlägelanordnung (1) nach Anspruch 1, **dadurch gekennzeichnet,**
**dass** der erste freie Endabschnitt (12) des Bolzenelements (8, 8') zumindest teilweise ein erstes Gewinde (13) aufweist und
**dass** das erste Befestigungselement (19) als Mutter ausgeführt ist.

3. Schlägelanordnung (1) nach einem der Ansprüche 1 bis 2, **dadurch gekennzeichnet,**
**dass** das Bolzenelement (8, 8') eine erste Anlagefläche (10) aufweist, mit der das Bolzenelement (8, 8') im montierten Zustand in Richtung des ersten Befestigungselements (19) an der Konsole (3) der Strohhäckslerwelle (2) axial, bezogen auf die Längsachse (A, A') des Bolzenelements (8, 8'), abgestützt ist.

4. Schlägelanordnung (1) nach einem der Ansprüche 1 bis 3, **dadurch gekennzeichnet,**
**dass** das Verdrehsicherungselement (32, 32') eine Stützfläche (33, 33') aufweist, die im montierten Zustand an der Konsole (3) der Strohhäckslerwelle (2) in Umfangsrichtung, bezogen auf die Längsachse (A, A') des Bolzenelements (8, 8'), abgestützt ist.

5. Schlägelanordnung (1) nach einem der Ansprüche 1 bis 4, **dadurch gekennzeichnet,**
**dass** das Bolzenelement (8, 8') einen ersten Sicherungsabsatz (9, 9') aufweist, dessen Querschnitt von einer Kreisform abweicht, und
**dass** das Verdrehsicherungselement (32, 32') einen ersten Durchbruch (35) aufweist, der komplementär zum ersten Sicherungsabsatz (9, 9') gestaltet ist und den ersten Sicherungsabsatz (9, 9') im montierten Zustand drehfest aufnimmt.

6. Schlägelanordnung (1) nach Anspruch 5, **dadurch gekennzeichnet,**
**dass** der erste Sicherungsabsatz (9, 9') des Bolzenelements (8, 8') im Querschnitt einen rechteckigen Mittelteil aufweist, an dessen zwei gegenüberliegenden kurzen Enden Kreissegmente anschließen.

7. Schlägelanordnung (1) nach einem der Ansprüche 1 bis 6, **dadurch gekennzeichnet,**
**dass** eine Hülse (26) mit einem zweiten Sicherungsabsatz (27), dessen Querschnitt von einer Kreisform abweicht, und einem ersten Lagerabsatz (30), auf dem der erste Schlägel (23) radial gelagert ist, auf dem Bolzenelement (8, 8') sitzt und
**dass** das Verdrehsicherungselement (32, 32') einen zweiten Durchbruch (37) aufweist, der komplementär zum zweiten Sicherungsabsatz (27) gestaltet ist und den zweiten Sicherungsabsatz (27) im montierten Zustand drehfest aufnimmt.

8. Schlägelanordnung (1) nach Anspruch 7, **dadurch gekennzeichnet,**
**dass** das Verdrehsicherungselement (32, 32') als Spange (38) ausgeführt ist, umfassend:
eine erste Seitenwange (34), die den ersten Durchbruch (35) aufweist,
eine zweite Seitenwange (36), die den zweiten Durchbruch (37) aufweist, und
einen Mittelsteg (39, 39'), der die Stützfläche (33, 33') aufweist.

9. Schlägelanordnung (1) nach Anspruch 8, **dadurch gekennzeichnet,**
**dass** der Mittelsteg (39, 39') des Verdrehsicherungselements (32, 32') bezogen auf die Längsachse (A, A') des Bolzenelements (8, 8') zwischen der ersten Seitenwange (34) und der zweiten Seitenwange (36) des Verdrehsicherungselements (32, 32') angeordnet ist.

10. Schlägelanordnung (1) nach einem der Ansprüche 1 bis 3, **dadurch gekennzeichnet,**
**dass** das Bolzenelement (8, 8') einteilig mit dem Verdrehsicherungselement (32, 32') ausgeführt ist und eine Stützfläche (33, 33') aufweist, die sich im montierten Zustand an der Konsole (3) der Strohhäckslerwelle (2) in Umfangsrichtung, bezogen auf die Längsachse (A, A') des Bolzenelements (8, 8'), abstützt.

11. Schlägelanordnung (1) nach einem der Ansprüche 1 bis 10, **dadurch gekennzeichnet,**
**dass** das Bolzenelement (8, 8') einen ersten Führungsabsatz (18) aufweist, der in die Befestigungsöffnung (4) der Konsole (3) einführbar ist.

12. Schlägelanordnung (1) nach einem der Ansprüche 1 bis 6 und 10, **dadurch gekennzeichnet,**
**dass** das Bolzenelement (8, 8') einen ersten Führungsabsatz (18), der in die Befestigungsöffnung (4) der Konsole (3) einführbar ist, und einen zweiten Lagerabsatz (17), auf dem der erste Schlägel (23) gelagert ist, aufweist.

13. Schlägelanordnung (1) nach einem der Ansprüche 1 bis 12, **dadurch gekennzeichnet,**
**dass** ein zweiter Schlägel (40) eine Bohrung (41) aufweist und mit der Bohrung (41) auf dem Bolzenelement (8, 8') sitzt,
ein zweites Befestigungselement (46), das mit einem zweiten freien Endabschnitt (14) des Bolzenelements (8, 8') verbunden ist,
eine zweite Scheibe (43), die eine Bohrung (44) aufweist, mit der die zweite Scheibe (43) auf dem Bolzenelement (8, 8') sitzt, und
die zweite Scheibe (43) zwischen dem zweiten Befestigungselement (46) und dem zweiten Schlägel (40) angeordnet ist, wobei
die zweite Scheibe (43) radial geschlitzt ausgeführt ist und
eine kleinste, mit der Längsachse (A, A') des Bolzenelements (8, 8') koaxiale, zylinderförmige Einhüllende des zweiten Befestigungselements (46) einen kleineren Radius als die Bohrung (41) des zweiten Schlägels (40) aufweist.

14. Strohhäckslerwelle (2) umfassend:
einen Rotor (16),
zumindest eine Schlägelanordnung (1) nach einem der Ansprüche 1 bis 13, zumindest eine Konsole (3), die fest mit dem Rotor (16) verbunden ist und eine Befestigungsöffnung (4) aufweist, durch die das Bolzenelement (8, 8') der zumindest einen Schlägelanordnung (1) geführt ist.

## Claims

1. A flail assembly (1) for a straw chopper shaft (2) with a mounting hole (4) in a bracket (3) comprising:
a bolt element (8, 8') which can be passed through the mounting hole (4) of the bracket (3),
an anti-rotation element (32, 32') by means of which the bolt element (8, 8') can be supported on the bracket (3) against rotation,
a first flail (23) having a bore (24)with which the first flail (23) is seated on the bolt element (8, 8'),
a first fastening element (19) connected to a first free end portion (12) of said bolt element (8, 8'), and
a first washer (20) having a bore (21) with which the first washer (20) sits on the bolt element (8, 8'), the first washer (20) being disposed between the first fastening element (19) and the first flail (23),
**characterized in**
**that** the first washer (20) is radially slotted, and
**that** the bolt element (8, 8') is axially braced with the first fastening element (19) and the first washer (20) with respect to a longitudinal axis (A, A') of the bolt element (8, 8'), and
**that** a smallest cylindrical envelope of the first fastening element (19), coaxial with the longitudinal axis (A, A') of the bolt element (8, 8'), has a smaller radius than the bore (24) of the first flail (23).

2. The flail assembly (1) according to claim 1,
**characterized in**
**that** the first free end portion (12) of the bolt element (8, 8') has at least partially
a first thread (13), and
wherein the first fastening element (19) is designed as a nut.

3. The flail assembly (1) according to one of claims 1 to 2,
**characterized in**
**that** the bolt element (8, 8') has a first contact surface (10) with which the bolt element (8, 8') in assembled condition is supported axially against the bracket (3) of the straw chopper shaft (2) in the direction of the first fastening element (19), relative to the longitudinal axis (A, A') of the bolt element (8, 8').

4. The flail assembly (1) according to one of claims 1 to 3,
**characterized in**
**that** the anti-rotation element (32, 32') has a supporting surface (33, 33') which, in the assembled condition, is supported against the bracket (3) of the straw chopper shaft (2) in the circumferential direction, relative to the longitudinal axis (A, A') of the bolt element (8, 8').

5. The flail assembly (1) according to one of claims 1 to 4,
**characterized in**
**that** the bolt element (8, 8') has a first securing shoulder (9, 9'), the cross-section of which differs from a circular shape, and
**that** the anti-rotation element (32, 32') has a first opening (35) which is designed complementary to the first securing shoulder (9, 9') and receives the first securing shoulder (9, 9') in a rotationally fixed manner in the assembled condition.

6. The flail assembly (1) according to claim 5,
**characterized in**
**that** the first securing shoulder (9, 9') of the bolt element (8, 8') has in cross-section a rectangular central part, at the two opposite short ends of which circular segments are connected.

7. The flail assembly (1) according to one of claims 1 to 6,
**characterized in**
**that** a sleeve (26) with a second securing shoulder (27), the cross-section of which deviates from a circular shape, and a first bearing shoulder (30), on which the first flail (23) is radially mounted, sits on the bolt element (8, 8'), and that the anti-rotation element (32, 32') has a second opening (37) which is designed complementary to the second securing shoulder (27) and accommodates the second securing shoulder (27) in a rotationally fixed manner in the assembled condition.

8. The flail assembly (1) according to claim 7,
**characterized in**
**that** the anti-rotation element (32, 32') is designed as a clasp (38), comprising:
a first side wall (34) having said first opening (35),
a second side wall (36) having said second opening (37), and
a center web (39, 39') having said support surface (33, 33').

9. The flail assembly (1) according to claim 8,
**characterized in**
**that** the center web (39, 39') of the anti-rotation element (32, 32') is arranged with respect to the longitudinal axis (A, A') of the bolt element (8, 8') between the first side wall (34) and the second side wall (36) of the anti-rotation element (32, 32').

10. The flail assembly (1) according to one of claims 1 to 3,
**characterized in**
**that** the bolt element (8, 8') is designed in one piece with the anti-rotation element (32, 32') and has a supporting surface (33, 33') which, in the assembled condition, is supported on the bracket (3) of the straw chopper shaft (2) in the circumferential direction, relative to the longitudinal axis (A, A') of the bolt element (8, 8').

11. The flail assembly (1) according to one of claims 1 to 10,
**characterized in**
**that** the bolt element (8, 8') has a first guide shoulder (18) which can be inserted into the fastening opening (4) of the bracket (3).

12. The flail assembly (1) according to one of claims 1 to 6 and 10,
**characterized in**
**that** the bolt element (8, 8') has a first guiding shoulder (18), which can be inserted into the mounting hole (4) of the bracket (3), and a second bearing shoulder (17), on which the first flail (23) is mounted.

13. The flail assembly (1) according to one of claims 1 to 12,
**characterized in**
**that** a second flail (40) has a bore (41) and is seated with the bore (41) on the bolt element (8, 8'),
**that** a second fastening element (46) is connected to a second free end portion (14) of said bolt element (8, 8'),
**that** a second washer (43) has a bore (44) with which the second washer (43) sits on the bolt element (8, 8'), and
**that** the second washer (43) is disposed between the second fastening element (46) and the second flail (40),
wherein the second washer (43) is radially slotted and a smallest cylindrical envelope of the second fastening element (46) coaxial with the longitudinal axis (A, A') of the bolt element (8, 8') has a smaller radius than the bore (41) of the second flail (40).

14. A straw chopper shaft (2) comprising:
a rotor (16),
at least one flail assembly (1) according to any one of claims 1 to 13, and
at least one bracket (3) which is firmly connected to the rotor (16) and has a mounting hole (4) through which the bolt element (8, 8') of the at least one flail assembly (1) is guided.

## Revendications

1. Dispositif de fléau (1) pour un arbre de broyeur de paille (2), pourvu d'une ouverture de fixation (4) dans une console (3) comprenant :
un élément formant goujon (8, 8'), qui est susceptible d'être enfilé à travers une ouverture de fixation (4) de la console (3),
un élément de blocage anti-torsion (32, 32') au moyen duquel l'élément formant goujon (8, 8') est susceptible de s'appuyer contre la console (3) pour éviter la torsion,
un premier fléau (23) pourvu d'un perçage (24), à l'aide duquel le premier fléau (23) repose sur l'élément formant goujon (8, 8'),
un premier élément de fixation (19), qui est relié avec un premier segment d'extrémité (12) libre de l'élément formant goujon (8, 8'), et
un premier disque (20) pourvu d'un perçage (21), à l'aide duquel le premier disque (20) repose sur l'élément formant goujon (8, 8'), le premier disque (20) étant placé entre le premier élément de fixation (19) et le premier fléau (23),
**caractérisé**
**en ce que** le premier disque (20) est réalisé en étant fendu en direction radiale et
**en ce que** l'élément formant goujon (8, 8') est contraint avec le premier élément de fixation (19) et le premier disque (20) en direction axiale, en rapport à un axe longitudinal (A, A') de l'élément format goujon (8, 8'), et
**en ce qu'**une plus petite enveloppante de forme cylindrique du premier élément de fixation (19), coaxiale à l'axe longitudinal (A, A') de l'élément formant goujon (8, 8') présente un rayon inférieur à celui du perçage (24) du premier fléau (23).

2. Dispositif de fléau (1) selon la revendication 1, **caractérisé**
**en ce que** le premier segment d'extrémité (12) libre de l'élément formant goujon (8, 8') comporte au moins en partie un premier filetage (13) et
**en ce que** le premier élément de fixation (19) est réalisé sous la forme d'un écrou.

3. Dispositif de fléau (1) selon l'une quelconque des revendications 1 à 2, **caractérisé**
**en ce que** l'élément formant goujon (8, 8') comporte une première surface d'appui (10), par laquelle, en position montée, l'élément formant goujon (8, 8') s'appuie dans la direction du premier élément de fixation (19) sur la console (3) de l'arbre de broyeur de paille (2) en direction axiale, rapportée à l'axe longitudinal (A, A') de l'élément formant goujon (8, 8').

4. Dispositif de fléau (1) selon l'une quelconque des revendications 1 à 3, **caractérisé**
**en ce que** l'élément de blocage anti-torsion (32, 32') comporte une surface de soutien (33, 33'), qui en position montée est appuyée en direction périphérique sur la console (3) de l'arbre de broyeur de paille (2), en rapport à l'axe longitudinal (A, A') de l'élément formant goujon (8, 8').

5. Dispositif de fléau (1) selon l'une quelconque des revendications 1 à 4, **caractérisé**
**en ce que** l'élément formant goujon (8, 8') comporte un premier talon de blocage (9, 9'), dont la section transversale est différente d'une forme circulaire, et en ce que l'élément de blocage anti-torsion (32, 32') comporte un premier ajour (35) qui est conçu en étant complémentaire au premier talon de blocage (9, 9') et qui en position montée réceptionne le premier talon de blocage (9, 9').

6. Dispositif de fléau (1) selon la revendication 5, **caractérisé**
**en ce que** le premier talon de blocage (9, 9') de l'élément formant goujon (8, 8') comporte dans la section transversale une pièce centrale rectangulaire sur les deux extrémités courtes opposées de laquelle se raccordent des segments circulaires.

7. Dispositif de fléau (1) selon l'une quelconque des revendications 1 à 6, **caractérisé**
**en ce que** par un deuxième talon de blocage (27), dont la section transversale est différente d'une forme circulaire, et par un premier talon de logement (30), sur lequel le premier fléau (23) est logé en direction radiale, une douille (26) repose sur l'élément formant goujon (8, 8') et
**en ce que** l'élément de blocage anti-torsion (32, 32') comporte un deuxième ajour (37), qui est conçu en étant complémentaire au deuxième talon de blocage (27) et qui en position montée réceptionne le deuxième talon de blocage (27) de manière solidaire en rotation.

8. Dispositif de fléau (1) selon la revendication 7, **caractérisé**
**en ce que** l'élément de blocage anti-torsion (32, 32') est réalisé sous la forme d'une agrafe (38), comprenant :
une première joue latérale (34), qui comporte le premier ajour (35),
une deuxième joue latérale (36), qui comporte le deuxième ajour (37), et une barrette centrale (39, 39'), qui comporte la surface de soutien (33, 33').

9. Dispositif de fléau (1) selon la revendication 8, **caractérisé**
**en ce que** la barrette centrale (39, 39') de l'élément de blocage anti-torsion (32, 32') est placée en rapport à l'axe longitudinal (A, A') de l'élément formant goujon (8, 8') entre la première joue latérale (34) et la deuxième joue latérale (36) de l'élément de blocage anti-torsion (32, 32').

10. Dispositif de fléau (1) selon l'une quelconque des revendications 1 à 3, **caractérisé**
**en ce que** l'élément formant goujon (8, 8') est réalisé en monobloc avec l'élément de blocage anti-torsion (32, 32') et comporte une surface de soutien (33, 33') qui en position montée s'appuie sur la console (3) de l'arbre de broyeur de paille (2) en direction périphérique, rapportée à l'axe longitudinal (A, A') de l'élément formant goujon (8, 8').

11. Dispositif de fléau (1) selon l'une quelconque des revendications 1 à 10, **caractérisé**
**en ce que** l'élément formant goujon (8, 8') comporte un premier talon de guidage (18), qui est susceptible d'être enfilé dans l'ouverture de fixation (4) de la console (3).

12. Dispositif de fléau (1) selon l'une quelconque des revendications 1 à 6 et 10, **caractérisé**
**en ce que** l'élément formant goujon (8, 8') comporte un premier talon de guidage (18), qui est susceptible d'être enfilé dans l'ouverture de fixation (4) de la console (3) et un deuxième talon de logement (17), sur lequel est logé le premier fléau (23).

13. Dispositif de fléau (1) selon l'une quelconque des revendications 1 à 12, **caractérisé,**
**en ce qu'**un deuxième fléau (40) comporte un perçage (41) et s'appuie par le perçage (41) sur l'élément formant goujon (8, 8'),
un deuxième élément de fixation (46), qui est relié avec un deuxième segment d'extrémité (14) libre l'élément formant goujon (8, 8'),
un deuxième disque (43), qui comporte un perçage (44), par lequel le deuxième disque (43) repose sur l'élément formant goujon (8, 8'), et
le deuxième disque (43) est placé entre le deuxième élément de fixation (46) et le deuxième fléau (40),
le deuxième disque (43) étant réalisé en étant fendu en direction radiale et
une plus petite enveloppante de forme cylindrique du deuxième élément de fixation (46), coaxiale à l'axe longitudinal (A, A') de l'élément formant goujon (8, 8') présentant un rayon inférieur à celui du perçage (41) du deuxième fléau (40).

14. Arbre de broyeur de paille (2) comprenant :
un rotor (16),
au moins un dispositif de fléau (1) selon l'une quelconque des revendications 1 à 13, au moins une console (3), qui est fixement reliée avec le rotor (16) et qui comporte une ouverture de fixation (4) à travers laquelle est guidé l'élément formant goujon (8, 8') de l'au moins un dispositif de fléau (1).
